# EUROPÄISCHE PATENTSCHRIFT

(11) **EP 3 737 921 B1**
(45) Veröffentlichungstag und Bekanntmachung des Hinweises auf die Patenterteilung: **11.01.2023**
(21) Anmeldenummer: 18808347.1
(22) Anmeldetag: 26.11.2018
(51) Int. Cl.: G01F 23/2962, G01N 29/024, G01F 23/296

(54) **ULTRASCHALLSENSOR UND FLUIDTANK MIT ULTRASCHALLSENSOR**
ULTRASONIC SENSOR AND FLUID TANK COMPRISING AN ULTRASONIC SENSOR
CAPTEUR À ULTRASONS ET RÉSERVOIR DE FLUIDE ÉQUIPÉ D'UN CAPTEUR À ULTRASONS

(30) Priorität: 11.01.2018 DE 102018200324
(43) Veröffentlichungstag der Anmeldung: 18.11.2020
(73) Patentinhaber: Robert Bosch GmbH, 70442 Stuttgart (DE)
(72) Erfinder: GERLACH, Andre, 71229 Leonberg-Hoefingen (DE); LIEBLER, Marko, 75015 Bretten (DE); SCHEUFELE, Bernd, 73257 Koengen (DE)
(86) Internationale Anmeldenummer: PCT/EP2018/082550
(87) Internationale Veröffentlichungsnummer: WO 2019/137684

(56) Entgegenhaltungen:
- EP-A1- 1 664 840
- EP-B1- 1 664 840
- WO-A1-2007/028356
- JP-A- 2004 023 781
- US-A- 5 726 952
- US-A1- 2015 007 654
- US-B1- 7 926 344

## Beschreibung

Die Erfindung betrifft einen Ultraschallsensor zur Laufzeitmessung in einem Medium, insbesondere in einem Fluid. Die Erfindung betrifft auch einen Fluidtank, der mit einem derartigen Ultraschallsensor ausgestattet ist.

### Stand der Technik

Um die immer strengeren gesetzlichen Vorgaben für Abgasemissionen von Kraftfahrzeugen mit Verbrennungsmotoren zu erfüllen, ist es insbesondere bei Dieselmotoren erforderlich, die Stickoxide (NOₓ) im Abgas zu verringern. Hierfür werden Abgasnachbehandlungssysteme mit SCR-Katalysatoren (SCR = "Selective Catalytic Reduction") eingesetzt, welche die Stickoxide selektiv in Stickstoff reduzieren. Als Reduktionsmittel wird hierfür eine wässrige Harnstofflösung verwendet, die vor dem SCR-Katalysator in den Abgasstrang eingebracht wird, den für die Reduktion benötigten Ammoniak bildet und zur gewünschten Verringerung der Stickoxide führt. In der Regel wird hierfür eine 32,5-prozentige wässrige Harnstofflösung eingesetzt. Dieses Reduktionsmittel ist für den Betrieb der Verbrennungskraftmaschine in ausreichender Menge und Qualität in einem Tank des Fahrzeugs bereitzustellen. Bei einer zu geringen Qualität bzw. Konzentration der Harnstofflösung nimmt der Wirkungsgrad der Stickoxidreduktion deutlich ab. Bei einem zu hohen Harnstoffanteil reagiert das gebildete Ammoniak nicht mit den Stickoxiden im Abgas und Ammoniak wird emittiert. Daher muss regelmäßig die Qualität bzw. Konzentration der wässrigen Harnstofflösung im Tank bestimmt werden. Insbesondere muss auch eine unzulässige Nachbetankung mit Wasser anstelle von Harnstofflösung erkannt werden.

Da die Schallgeschwindigkeit in der Harnstofflösung eine Funktion der Konzentration ist, kann die Konzentration der Harnstofflösung durch Bestimmen der Laufzeiten von Ultraschallsignalen in der Harnstofflösung bestimmt werden.

Um thermisch und alterungsbedingte Änderungen der Messstrecke zu reduzieren, die sich negativ sich auf die Genauigkeit des Messsystems auswirken, wurde DE 10 2013 219 643 A1 eine Ausgestaltung zur ultraschallbasierten Messung mit zwei Reflektoren vorgeschlagen. Hierbei bestehen die beiden Reflektoren aus dem gleichen Material bzw. gleichen fest verbundenen Teilen, um damit die Effekte von Temperaturänderungen und Alterung auf ein einziges Material zu beschränken. Weiterhin basiert die Konzentrationsbestimmung nicht mehr auf der Laufzeitmessung eines Ultraschallsignals für die Messstrecke Sender-Reflektor-Empfänger, sondern auf der Auswertung des gemessenen Laufzeitunterschieds zwischen zwei verschieden weit vom Schallwandler entfernten Reflektoren.

Häufig besteht der Wunsch, neben einer ersten Ultraschall-Laufzeitstrecke, die zur Bestimmung der Konzentration der Harnstofflösung verwendet wird, wenigstens eine weitere Ultraschall-Laufzeitstrecke zur Verfügung zu stellen. Die zusätzliche Ultraschall-Laufzeitstrecke kann z. B. als Referenzstrecke verwendet werden. Die zusätzliche Ultraschall-Laufzeitstrecke kann auch als zweite Messstrecke, um die Messgenauigkeit zu verbessern, oder um neben der Konzentration auch die Füllhöhe des Fluids im Tank zu bestimmen.

Bei der Messung der Füllhöhe wird üblicherweise die Laufzeit einer Schallwelle, die von einem Ultraschallwandler abgestrahlt und wieder empfangen wird, gemessen. Die Schallwandler strahlen typischerweise in vertikaler Richtung ab und das Schallsignal wird an der Fluidoberfläche reflektiert.

WO 2007/028356 A1 offenbart ein Verfahren zur Messung der Füllhöhe und der Neigung einer Oberfläche einer Flüssigkeit, insbesondere von Öl in einem Behälter, bei dem ein Ultraschallwandler eine Ultraschallwelle aussendet und ein an der Oberfläche reflektiertes Signal empfängt. Die Laufzeit und die Intensität des empfangenen Signals werden gemessen und auf der Basis der gemessenen Laufzeit, der gemessenen Intensität und einer bekannten Charakteristik der ausgestrahlten Ultraschallwelle werden die Füllhöhe und die Neigung der Oberfläche bestimmt.

US 7,926 344 B1 offenbart einen nicht-invasiven Ultraschallsensor für einen Fluidbehälter mit einem Ultraschallwandler und einem Koppler, der in akustischer Verbindung mit dem Ultraschallwandler steht. Der Koppler ist dazu ausgebildet, sich an den Boden des Fluidbehälters anzupassen und der Fluidbehälter wird durch sein Gewicht gegen den Koppler gedrückt.

JP 2004 023781 A beschreibt einen Ultraschallsensor mit einer akustischen Linse.

US 5 726 952 A beschreibt einen Ultraschallsensor mit anpassbarer Emissionscharakteristik.

Es ist eine Aufgabe der Erfindung, einen Ultraschallsensor zur Verfügung zu stellen, der wenigstens zwei Messstrecken bedienen kann.

### Offenbarung der Erfindung:

Gemäß einem Ausführungsbeispiel der Erfindung umfasst ein Ultraschallsensor zur Laufzeitmessung in einem Medium, insbesondere in einem Fluid, einen Schallwandler, der als Ultraschallsender und/oder als Ultraschallempfänger einsetzbar ist. Der Schallwandler ist so ausgebildet, dass er eine Richtcharakteristik hat. Die Richtcharakteristik ist derart ausgebildet, dass der Schallwandler Schall in wenigstens zwei unterschiedliche Richtungen abstrahlt und/oder Schall aus wenigstens zwei unterschiedlichen Richtungen empfängt.

Die Richtcharakteristik ist insbesondere so ausgebildet, dass sie eine Hauptkeule und wenigstens eine Nebenkeule aufweist.

Der Schallwandler weist eine Membran mit einer Abmessung a im Falle einer kreisförmig ausgebildeten Membran, und Abmessungen a, b im Falle einer ellipsenförmig ausgebildeten Membran auf.

Die Membran weist eine variable Dicke d mit mehreren Erhebungen und/oder mehreren Vertiefungen auf; und/oder auf der Membran ist ein richtungsweisendes Element angebracht, das eine variable Dicke d mit mehreren Erhebungen und/oder mehreren Vertiefungen aufweist. Die Erhebungen und/oder Vertiefungen können eckig und/oder abgerundet ausgebildet sein. Die Erhebungen und/oder Vertiefungen können auch mit abgerundeten Ecken ausgebildet sein. Eine mit Erhebungen und/oder Vertiefungen ausgebildete Membran ermöglicht es ebenfalls, eine gewünschte Richtcharakteristik mit wenigstens zwei Abstrahlrichtungen zur Verfügung zu stellen.

Die Membran weist wenigstens eine der folgenden Eigenschaften auf:
In einer Ausführungsform ist die Membran kreisförmig ausgebildet und die Abmessung a ist ein Durchmesser der Membran. Die Abmessung a ist im Falle einer kreisförmig ausgebildeten Membran das Zwei- bis Dreifache der Wellenlänge λ des abgestrahlten und/oder empfangenen Schalls (2 A ≤ a ≤ 3 λ). Auf diese Weise kann die gewünschte Richtcharakteristik effektiv realisiert werden.

In einer Ausführungsform ist die Membran ellipsenförmig ausgebildet, wobei eine der Abmessungen a, b der ellipsenförmigen Membran im Bereich des Zwei- bis Dreifachen der Wellenlänge des abgestrahlten und/oder empfangenen Schalls liegt.

In einer Ausführungsform ist die Membran rechteckig mit den Seitenlängen a und b ausgebildet. Die Membran kann insbesondere quadratisch ausgebildet sein (a=b). Die Abmessung a ist im Falle einer rechteckigen Membran das 1,7 bis 3,5-fache der Wellenlänge λ des abgestrahlten und/oder empfangenen Schalls (1,7 λ ≤ a ≤ 3,5 λ). Auf diese Weise kann die gewünschte Richtcharakteristik effektiv realisiert werden. Ist die Membran nicht quadratisch ausgeführt, so kann die zweite Abmessung b von der Abmessung a verschieden sein, sollte aber insbesondere Werte innerhalb des anderthalb bis vierfache der Wellenlänge λ des abgestrahlten und/oder empfangenen Schalls im Fluid annehmen (1,5 λ ≤ b ≤ 4 λ).

Ausführungsbeispiele der Erfindung umfassen auch einen Fluidtank zur Speicherung eines Fluids, insbesondere eines fluiden Reduktionsmittels zur Abgasreduktion, wobei in dem Fluidtank ein Ultraschallsensor gemäß einem Ausführungsbeispiel der Erfindung vorgesehen ist.

Ein Schallwandler mit einer erfindungsgemäßen Richtcharakteristik ermöglicht es, mit einem einzigen Schallwandler wenigstens zwei verschiedene Laufzeitstrecken zu bedienen. Mit einem einzigen Schallwandler kann so neben der Laufzeitmessstrecke, die zur Bestimmung der Konzentration des Fluids verwendet wird, auch eine Referenzstrecke, die zur Kalibrierung der Laufzeitmessung verwendet werden kann, bedient werden. Alternativ oder zusätzlich kann auch eine zweite Laufzeitmessstrecke bedient werden, um die Messgenauigkeit zu erhöhen, und/oder um die Füllhöhe des Fluids im Tank zu bestimmen.

Ein erfindungsgemäßer Schallwandler ermöglicht es, auf den Einsatz eines zweiten Schallwandlers zu verzichten. Die Komplexität und die Kosten eines Fluidtanks, der mit mehreren Ultraschall-Messstrecken ausgebildet ist, können daher gering gehalten werden.

Die Membran kann insbesondere aus Metall, Kunststoff, Keramik oder einem Faser-Kunststoff-Verbund ausgebildet sein und eine maximale Dicke d von 0,2 λ ≤ d ≤ 5 λ, insbesondere eine Dicke d von 0,2 λ ≤ d ≤ 3 λ, aufweisen, wobei λ die Wellenlänge des Schalls im Fluid ist.

Auch das richtungsweisende Element kann aus Metall, Kunststoff, Keramik oder einem Faser-Kunststoff-Verbund ausgebildet sein. Das richtungsweisende Element kann aus dem gleichen Material wie die Membran oder aus einem anderen Material als die Membran gefertigt sein. Das richtungsweisende Element kann auf die Membran geklebt oder auf eine andere Weise fest mit der Membran verbunden sein. Die Dicke d des richtungsweisenden Elementes orientiert sich an der Wellenlänge λ des Schalls im Fluid und sollte bevorzugt im Bereich 0,4 λ ≤ d ≤ 2 λ gewählt werden.

In einer Ausführungsform sind die Erhebungen und/oder Vertiefungen rotationssymmetrisch um eine Achse A oder spiegelsymmetrisch zu einer Spiegelebene A ausgebildet. Auf diese Weise kann eine rotations- bzw. spiegelsymmetrische Richtcharakteristik realisiert werden.

Alternativ können die Erhebungen und/oder Vertiefungen asymmetrisch ausgebildet sein, insbesondere um eine asymmetrische Richtcharakteristik zu realisieren.

Die Erhebungen und/oder Vertiefungen können eckig und/oder abgerundet ausgebildet sein. Sofern die Abrundungen Radien größer als 0,1 λ annehmen, beeinflussen sie die Richtcharakteristik wesentlich und sind daher Gestaltungsmerkmal. Kleinere Abrundungen können aus Fertigungsgründen gewählt werden, z. B. für eine bessere Entformung der Teile.

Ausführungsbeispiele der Erfindung werden im Folgenden unter Bezugnahme auf die beigefügten Figuren erläutert.

### Kurze Beschreibung der Figuren

Figur 1 zeigt einen Fluidtank mit einem Ultraschallsensor gemäß einem Ausführungsbeispiel der Erfindung.
Figur 2 zeigt die Richtcharakteristik eines Ultraschallsensors, der gemäß einem Ausführungsbeispiel der Erfindung ausgebildet ist.
Die Figuren 3 und 4 zeigen Ausführungsbeispiele erfindungsgemäßer Membranen in der Draufsicht.
Die Figuren 5A bis 5I zeigen schematische Querschnittansichten erfindungsgemäßer Membranen.
Die Figuren 6A bis 6C schematische Querschnittansichten von Membranen, auf denen jeweils ein richtungsweisendes Element angebracht ist.

### Figurenbeschreibung

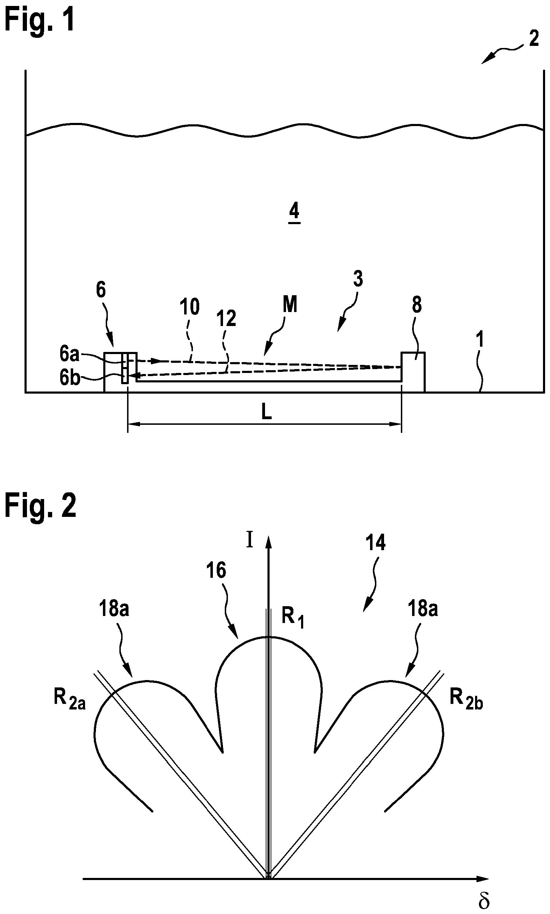

Figur 1 zeigt in einer schematischen Darstellung einen Fluidtank 2, insbesondere einen Fluidtank 2 zur Speicherung eines flüssigen Reduktionsmittels 4 zur Abgasreduktion (wässrige Harnstofflösung), mit einem Ultraschallsensor 3 gemäß einem Ausführungsbeispiel der Erfindung.

Der Ultraschallsensor 3 ist am Boden 1 des Tanks 2 angeordnet und umfasst einen piezoelektrischen Schallwandler 6, der ausgebildet ist, Ultraschallsignale 10, 12 auszusenden und zu empfangen. D. h. der piezoelektrische Schallwandler 6 dient sowohl als Ultraschallsender 6a als auch als Ultraschallempfänger 6b.

Im Betrieb sendet der piezoelektrische Schallwandler 6 ein Ultraschallsignal 10 in das im Tank befindliche Fluid 4. Die Schallwellen des während des Sendebetriebs des Schallwandlers 6 ausgesendeten Ultraschallsignals 10 durchlaufen eine definierte Messstrecke M in dem zu analysierenden Fluid 4. Ein Teil des Ultraschallsignals 10 wird an einem Reflektor 8 für Ultraschallwellen, der am gegenüberliegenden Ende der Messstrecke M angeordnet ist, reflektiert und gelangt nach erneutem Durchlaufen der gleichen Messstrecke M schließlich wieder zu dem nun als Ultraschallempfänger 6b arbeitenden Schallwandler 6. Aus der gemessenen Laufzeit des Ultraschallsignals 10, 12 zwischen dem Aussenden und dem Empfangen kann bei bekannter Länge L der Messstrecke M die Schallgeschwindigkeit im Fluid 4 bestimmt werden.

Mit einem ebenfalls im Tank 2 angebrachten Temperatursensor 7 kann die Temperatur des Fluids 4 bestimmt werden.

Da die Schallgeschwindigkeit im Fluid 4 eine bekannte Funktion der Konzentration und der Temperatur des Fluids 4, insbesondere wässriger Harnstofflösung, ist, kann die Konzentration des Fluids 4 aus der gemessenen Temperatur und der ermittelten Schallgeschwindigkeit im Fluid 4 bestimmt werden.

Häufig besteht der Wunsch, neben der zur Bestimmung der Konzentration der des Fluids 4 verwendeten Messstrecke M wenigstens eine weitere (in der Figur 1 nicht gezeigte) Messstrecke zur Verfügung zu stellen, z. B. um neben der eigentlichen Messstrecke M eine Referenzstrecke zur Verfügung zu stellen, um neben der Konzentration auch die Füllhöhe des Fluids im Tank zu bestimmen und/oder um die Messgenauigkeit mit Hilfe einer zweiten Messstrecke zu verbessern.

Um wenigstens eine weitere Messstrecke zur Verfügung zu stellen, wird gemäß einem Ausführungsbeispiel der Erfindung ein Schallwandler 6 eingesetzt, der eine Richtcharakteristik 14 aufweist, die derart ausgebildet ist, dass der Schallwandler 6 Schall in wenigstens zwei unterschiedliche Richtungen R₁, R₂ₐ, R_{2b} abstrahlt und/oder Schall aus wenigstens zwei unterschiedlichen Richtungen R₁, R₂ₐ, R_{2b} empfängt (siehe Figur 2).

Figur 2 zeigt eine schematische Darstellung einer Richtcharakteristik 14 gemäß einem Ausführungsbeispiel der Erfindung. In der Figur 2 ist die Intensität I der ausgesendeten Schallsignale bzw. die Empfindlichkeit für einfallende Schallsignale in einer Schnittebene als Funktion des Winkels δ aufgetragen.

Die in der Figur 2 beispielhaft gezeigte Richtcharakteristik 14 weist eine Hauptkeule 16 und zwei Nebenkeulen 18a, 18b auf. Die Hauptkeule 16 ist in einer Hauptabstrahlrichtung R₁ ausgerichtet, die beiden Nebenkeulen 18a, 18b sind jeweils entlang einer Nebenabstrahlrichtung R₂ₐ, R_{2b} ausgerichtet.

In dem in der Figur 2 gezeigten Ausführungsbeispiel sind die Nebenkeulen 18a, 18b spiegel- oder rotationssymmetrisch zur Hauptabstrahlrichtung R₁ ausgebildet.

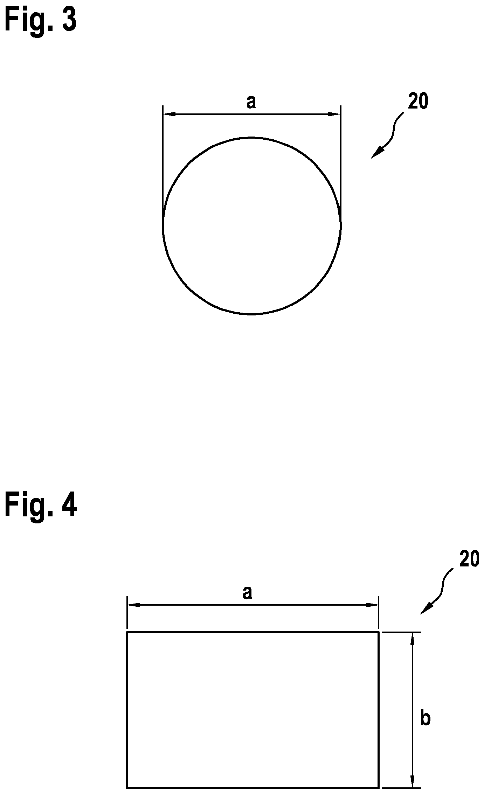

Die Hauptkeule 16 kann für eine erste Laufzeitmessung, beispielsweise zur Bestimmung der Konzentration des Fluids 4, verwendet werden. Die Nebenkeulen 18a, 18b können jeweils für eine zusätzliche Laufzeitmessung, beispielsweise für eine Referenzmessung, eine zweite Konzentrationsmessung und/oder zur Bestimmung der Füllhöhe des Fluids 4 im Fluidtank 2 verwendet werden. Es kann auch nur eine der Nebenkeulen 18a, 18b für eine Messung verwendet werden, so dass die zweite Nebenkeule 18a, 18b ungenutzt bleibt. Figur 3 zeigt eine Draufsicht auf eine in einem Schallwandler 6 eingesetzte Membran 20 gemäß einem Ausführungsbeispiel der Erfindung.

Die Membran 20 ist kreisrund ausgebildet und hat einen Durchmesser a in einem Bereich der zwei- bis dreifachen der Wellenlänge A des abgestrahlten und/oder empfangenen Schalls (2 λ ≤ a ≤ 3 λ). In einem nicht gezeigten Ausführungsbeispiel kann die Membran 20 auch ellipsenförmig ausgebildet sein, wobei wenigstens einer der Durchmesser a, b der Ellipse im Bereich des zwei- bis dreifachen der Wellenlänge λ des abgestrahlten und/oder empfangenen Schalls liegt.

Mit einer Membran 20, wie sie in der Figur 3 gezeigt ist, kann die gewünschte Richtcharakteristik 14 effektiv realisiert werden.

Figur 4 zeigt eine Draufsicht auf eine in einem Schallwandler 6 eingesetzte Membran 20 gemäß einem weiteren Ausführungsbeispiel der Erfindung.

Die in der Figur 4 gezeigte Membran 20 ist rechteckig mit einer Länge a und einer Breite b ausgebildet. Die Länge a der Membran 20 liegt im Bereich des 1,7 bis 3,5-fachen der Wellenlänge λ des abgestrahlten und/oder empfangenen Schalls (1,7 λ ≤ a ≤ 3,5 λ). Die Membran 20 kann insbesondere auch quadratisch ausgebildet sein (a=b). Auch mit einer rechteckigen Membran 20, wie sie in der Figur 4 gezeigt ist, kann die gewünschte Richtcharakteristik 14 effektiv realisiert werden.

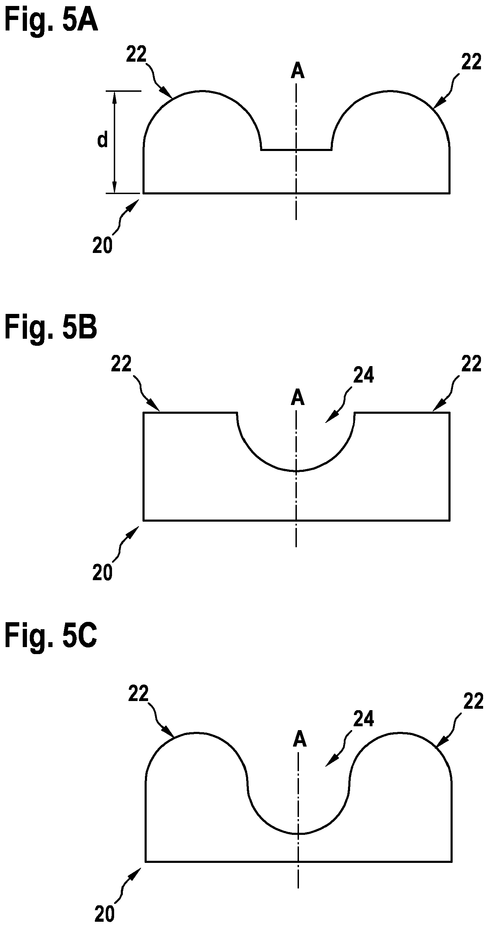

Die Figuren 5A bis 5I zeigen schematische Querschnittansichten verschiedener erfindungsgemäßer Membranen 20. Die Membranen 20 haben jeweils eine maximale Dicke d von 0,2 λ ≤ d ≤ 3 λ mit λ als Fluidschallwellenlänge.

Die Membranen 20 weisen Erhebungen 22 und/oder Vertiefungen 24 auf, so dass die Dicke d über die Fläche der Membran 20 variiert.

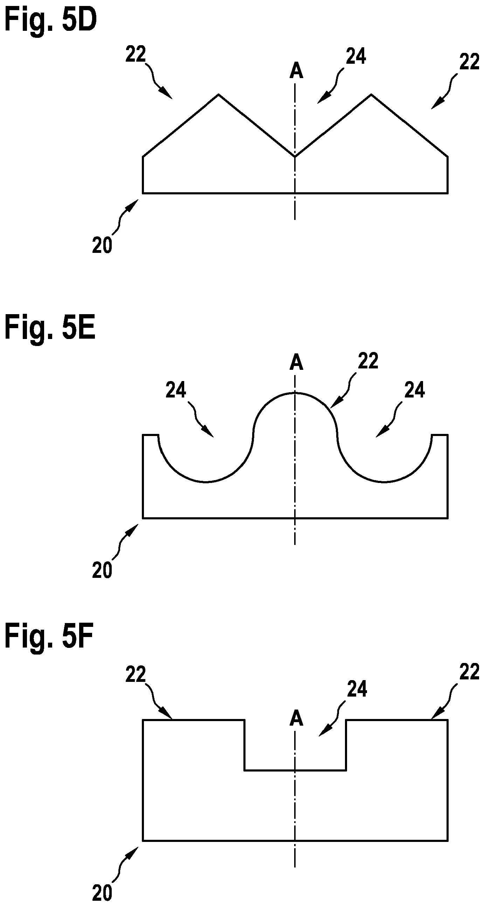

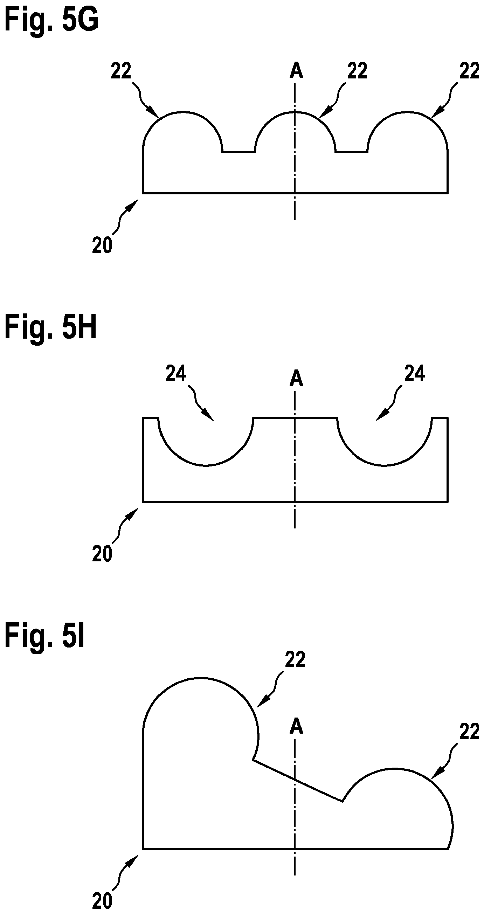

Die Erhebungen 22 und/oder Vertiefungen 24 können abgerundet, insbesondere mit einem halbkreisförmigen Querschnitt (Figuren 5A, 5B, 5C, 5E, 5G, 5H) oder eckig (Figuren 5D, 5F) ausgebildet sein. Eckige Erhebungen 22 und Vertiefungen 24 können spitz/dreieckig (Figuren 5D) oder kastenförmig (Figur 5F) ausgebildet sein. Die Erhebungen 22 und/oder Vertiefungen 24 können auch mit abgerundeten Ecken ausgebildet sein.

Im Zentrum der Membran 20 kann eine Vertiefung 24 (Figuren 5A, 5B, 5C, 5D, 5F) oder eine Erhebung 22 (Figuren 5E, 5G, 5H) ausgebildet sein.

Die Erhebungen 22 und Vertiefungen 24 können rotationssymmetrisch um eine Achse A oder spiegelsymmetrisch zu einer Spiegelebene A ausgebildet sein (Figuren 5A-5H), um eine symmetrische Richtcharakteristik 14 zu erzeugen.

Alternativ können die Erhebungen 22 und Vertiefungen 24 auch asymmetrisch ausgebildet sein, wie es in der Figur 5I gezeigt ist, um eine asymmetrische Richtcharakteristik 14 zu erzeugen.

Obwohl in die in den Figur 5A-5I gezeigten Membranen maximal drei Erhebungen 22 und zwei Vertiefungen 24 aufweisen, kann die Membran 20 in weiteren, nicht in den Figuren gezeigten Ausführungsbeispielen auch mit mehr als zwei/drei Erhebungen 22 und Vertiefungen 24 ausgebildet sein, um die gewünschte Richtcharakteristik 14 zu erzeugen.

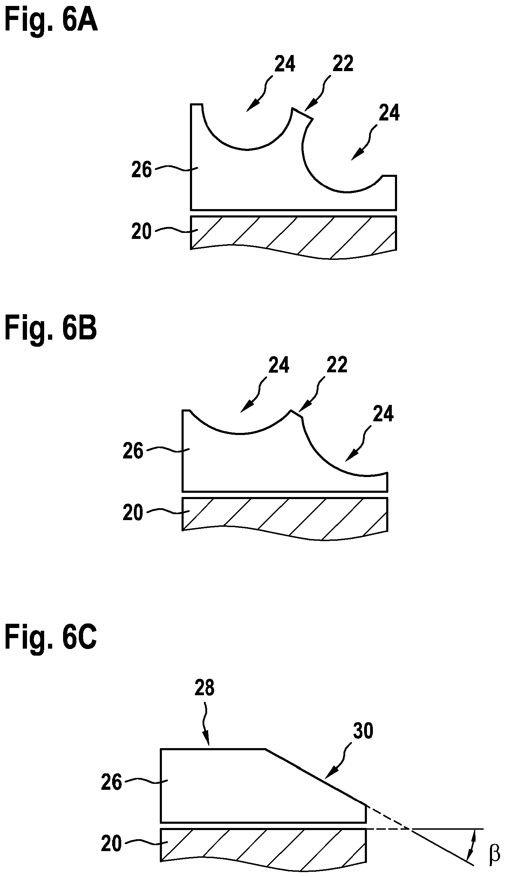

Die Figuren 6A bis 6C sind schematische Querschnittansichten von Membranen 20, auf denen jeweils ein richtungsweisendes Element 26 angebracht ist. Das richtungsweisende Element 26 kann auf die Membran 20 geklebt oder auf andere Weise fest mit der Membran 20 verbunden sein.

Das richtungsweisende Element 26 kann aus dem gleichen Material wie die Membran 20 oder aus einem anderen Material als die Membran 20 gefertigt sein.

Das richtungsweisende Element 26 ist mit Erhebungen 22 und/oder Vertiefungen 24 ausgebildet, um die gewünschte Richtcharakteristik zu realisieren.

Wie bei den in den Figuren 5A bis 5I gezeigten Membranen 20 können auch die Erhebungen 22 und/oder Vertiefungen 24 des richtungsweisenden Elements 26 abgerundet oder eckig ausgebildet sein (siehe Figuren 6A, 6B). Das richtungsweisende Element 26 kann auch einen ersten geradlinigen Bereich 28 und einen zweiten geradlinigen Bereich 30 aufweisen, wobei der erste geradlinige Bereich 28 parallel zur Oberfläche der Membran 20 und der zweite geradlinige Bereich 30 in einem Winkel β zur Oberfläche der Membran 20 ausgerichtet ist. Der Winkel β kann eine Größe zwischen 0° und 45°, insbesondere eine Größe zwischen 20° und 30° haben.

Die Richtcharakteristik 14 weist in diesem Fall eine senkrecht nach vorne gerichtete Keule und eine seitlich nach rechts gerichtete Keule auf.

Die Grundform des richtungsweisenden Elements 16 kann z. B. kreisförmig oder rechteckig sein. Die Grundformen der Membran 20 und des richtungsweisenden Elements 16 können gleich oder verschieden sein.

## Patentansprüche

1. Ultraschallsensor (3) zur Laufzeitmessung in einem Medium (4), insbesondere in einem Fluid (4), mit einem Schallwandler (6), der als Ultraschallsender (6a) und/oder als Ultraschallempfänger (6b) einsetzbar ist,
wobei der Schallwandler (6) mit einer Richtcharakteristik (14) derart ausgebildet ist, dass er Schall in wenigstens zwei unterschiedliche Richtungen (R₁, R₂ₐ, R_{2b}) abstrahlt und/oder Schall aus wenigstens zwei unterschiedlichen Richtungen (R₁, R₂ₐ, R_{2b}) empfängt,
wobei der Schallwandler (6) eine Membran (20) mit wenigstens einer Abmessung a oder Abmessungen a, b aufweist,
wobei die Membran (20) eine variable Dicke (d) mit mehreren Erhebungen (22) und/oder mehreren Vertiefungen (24) aufweist und/oder auf der Membran (20) ist ein richtungsweisendes Element (26) angebracht, das eine variable Dicke (d) mit mehreren Erhebungen (22) und/oder mehreren Vertiefungen (24) aufweist;
**dadurch gekennzeichnet, dass** die Membran (20) wenigstens eine der folgenden Eigenschaften aufweist:
die Membran (20) ist kreisförmig ausgebildet und die Abmessung a ist ein Durchmesser der Membran (20), wobei die Abmessung a das Zwei- bis Dreifache der Wellenlänge λ des abgestrahlten und/oder empfangenen Schalls ist;
die Membran (20) ist ellipsenförmig ausgebildet, wobei eine der Abmessungen a, b der ellipsenförmigen Membran (20) im Bereich des Zwei- bis Dreifachen der Wellenlänge des abgestrahlten und/oder empfangenen Schalls liegt;
die Membran (20) ist rechteckig ausgebildet, wobei die wenigstens eine Abmessung eine ersten Seitenlänge a und eine zweite Seitenlänge b umfasst, wobei die erste Seitenlänge a das 1,7 bis 3,5-fache der Wellenlänge λ und die zweite Seitenlänge b das 1,5 bis 4-fache der Wellenlänge λ des abgestrahlten und/oder empfangenen Schalls ist, wobei die Membran (20) insbesondere quadratisch mit einer Seitenlänge a=b ausgebildet ist.

2. Ultraschallsensor (3) nach Anspruch 1, wobei die Richtcharakteristik (14) eine Hauptkeule (16) und wenigstens eine Nebenkeule (18a, 18b) aufweist.

3. Ultraschallsensor (3) nach Anspruch 1 oder 2, wobei die Erhebungen (22) und/oder Vertiefungen (24) rotationssymmetrisch um eine Achse A oder spiegelsymmetrisch zu einer Spiegelebene A ausgebildet sind.

4. Ultraschallsensor (3) nach einem der Ansprüche 1 bis 3, wobei die Erhebungen (22) und/oder Vertiefungen (24) eckig und/oder abgerundet ausgebildet sind.

5. Fluidtank (2) zur Speicherung eines Fluids (4), insbesondere eines fluiden Reduktionsmittels (4) zur Abgasreduktion, wobei in dem Fluidtank (2) ein Ultraschallsensor (3) nach einem der vorangehenden Ansprüche angeordnet ist.

## Claims

1. Ultrasonic sensor (3) for measuring transit time in a medium (4), in particular in a fluid (4), comprising an acoustic transducer (6) which can be used as an ultrasonic transmitter (6a) and/or as an ultrasonic receiver (6b), wherein the acoustic transducer (6) is designed with a directional characteristic (14) in such a way that it emits sound in at least two different directions (R₁, R₂ₐ, R_{2b}) and/or receives sound from at least two different directions (R₁, R₂ₐ, R_{2b}), wherein the acoustic transducer (6) has a diaphragm (20) with at least one dimension a or dimensions a, b, wherein the diaphragm (20) has a variable thickness (d) with a plurality of raised portions (22) and/or a plurality of recesses (24) and/or a direction-indicating element (26) is fitted on the diaphragm (20) and has a variable thickness (d) with a plurality of raised portions (22) and/or a plurality of recesses (24); **characterized in that** the diaphragm (20) has at least one of the following properties:
the diaphragm (20) is of circular design and the dimension a is a diameter of the diaphragm (20), wherein the dimension a is two to three times the wavelength λ of the emitted and/or received sound;
the diaphragm (20) is of elliptical design, wherein one of the dimensions a, b of the elliptical diaphragm (20) lies in the range of two to three times the wavelength of the emitted and/or received sound;
the diaphragm (20) is of rectangular design, wherein the at least one dimension comprises a first side length a and a second side length b, wherein the first side length a is 1.7 to 3.5 times the wavelength λ and the second side length b is 1.5 to 4 times the wavelength λ of the emitted and/or received sound, wherein the diaphragm (20) is, in particular, of square design with a side length a = b.

2. Ultrasonic sensor (3) according to Claim 1, wherein the directional characteristic (14) has a main lobe (16) and at least one side lobe (18a, 18b).

3. Ultrasonic sensor (3) according to Claim 1 or 2, wherein the raised portions (22) and/or recesses (24) are designed with rotational symmetry about an axis A or with mirror-image symmetry with respect to a mirror plane A.

4. Ultrasonic sensor (3) according to one of Claims 1 to 3, wherein the raised portions (22) and/or recesses (24) are of angular and/or rounded design.

5. Fluid tank (2) for storing a fluid (4), in particular a fluid reducing agent (4) for exhaust gas reduction, wherein an ultrasonic sensor (3) according to one of the preceding claims is arranged in the fluid tank (2) .

## Revendications

1. Capteur à ultrasons (3) destiné à la mesure du temps de propagation dans un milieu (4), en particulier dans un fluide (4), ledit capteur comprenant un transducteur acoustique (6) qui peut être utilisé comme émetteur à ultrasons (6a) et/ou comme récepteur à ultrasons (6b),
le transducteur acoustique (6) étant conçu avec une caractéristique directionnelle (14) de manière à émettre un son dans au moins deux directions différentes (R₁, R₂ₐ, R_{2b}) et/ou à recevoir un son provenant d'au moins deux directions différentes (R₁, R₂ₐ, R_{2b}),
le transducteur acoustique (6) comportant une membrane (20) ayant au moins une dimension a ou des dimensions a, b,
la membrane (20) ayant une épaisseur variable (d) pourvue d'une pluralité de bosses (22) et/ou d'une pluralité de creux (24) et/ou un élément directionnel (26), qui a une épaisseur variable (d) pourvue d'une pluralité de bosses (22) et/ou une pluralité de creux (24), étant fixé sur la membrane (20) ;
**caractérisé en ce que** la membrane (20) possède au moins une des propriétés suivantes :
la membrane (20) est circulaire et la dimension a est un diamètre de la membrane (20), la dimension a étant égale à deux à trois fois la longueur d'onde λ du son émis et/ou reçu ;
la membrane (20) est elliptique, l'une des dimensions a, b de la membrane elliptique (20) étant dan la gamme de deux et trois fois la longueur d'onde du son émis et/ou reçu ;
la membrane (20) est rectangulaire, l'au moins une dimension comprenant une première longueur de côté a et une deuxième longueur de côté b, la première longueur de côté a étant égale à 1,7 à 3,5 fois la longueur d'onde λ et la deuxième longueur de côté b étant égale à 1,5 à 4 fois la longueur d'onde λ du son émis et/ou reçu, la membrane (20) étant notamment carrée avec une longueur de côté a=b.

2. Capteur à ultrasons (3) selon la revendication 1, la caractéristique directionnelle (14) comportant un lobe principal (16) et au moins un lobe latéral (18a, 18b) .

3. Capteur à ultrasons (3) selon la revendication 1 ou 2, les bosses (22) et/ou les creux (24) étant formées à symétrie de révolution autour d'un axe A ou à symétrie de miroir par rapport à un plan de miroir A.

4. Capteur à ultrasons (3) selon l'une des revendications 1 à 3, les bosses (22) et/ou les creux (24) étant de forme anguleuse et/ou arrondie.

5. Réservoir de fluide (2) destiné à stocker un fluide (4), en particulier un agent réducteur fluide (4) destiné à la réduction de gaz d'échappement, un capteur à ultrasons (3) selon l'une des revendications précédentes étant disposé dans le réservoir de fluide (2) .
